# FASCICULE DE BREVET EUROPEEN

(11) **EP 2 574 977 B1**
(45) Date de publication et mention de la délivrance du brevet: **26.10.2016**
(21) Numéro de dépôt: 12179368.1
(22) Date de dépôt: 06.08.2012
(51) Int. Cl.: G02F 1/13, G02F 1/1333

(54) **Procédé d'encapsulation d'un dispositif électro-optique**
Einkapselungsverfahren einer elektro-optischen Vorrichtung
Method for encapsulating an electro-optical device

(30) Priorité: 30.09.2011 FR 1102966
(43) Date de publication de la demande: 03.04.2013
(73) Titulaire: Thomson Licensing, 92130 Issy-les-Moulineaux (FR)
(72) Inventeur: Kretz, Thierry, 38430 SAINT JEAN DE MOIRANS (FR); Meunier, Bernard, 38590 SAINT ETIENNE DE SAINT GEOIRS (FR)
(74) Mandataire: Esselin, Sophie

(56) Documents cités:
- US-A1- 2009 011 197
- US-A1- 2009 183 819
- US-A1- 2010 296 027
- US-A1- 2011 007 391

## Description

### DOMAINE DE L'INVENTION

L'invention concerne les dispositifs électro-optiques utilisés dans des environnements sévères, pourvus en surface d'un film optique ou d'un empilement de films optiques collés sur un substrat transparent, mais en retrait du bord du substrat, qui nécessitent une encapsulation appropriée de ce ou ces films optiques.

L'invention concerne plus particulièrement les dispositifs électro-optiques sensibles aux variations d'épaisseur introduites par des contraintes mécaniques qui résultent de cette encapsulation, et notamment, les dispositifs à base de matériau électro-optique fluide : cristaux liquides, matériau à électro-mouillage, encre électronique, ou autre.

### CONTEXTE ET ETAT DE LA TECHNIQUE

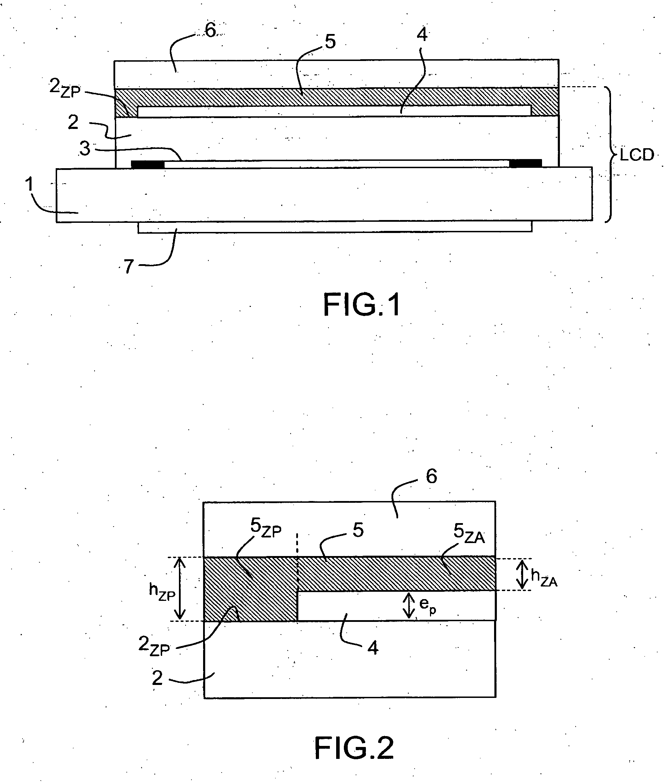

Il s'agit de protéger le film ou l'empilement de films optiques des agressions dues à l'environnement d'utilisation : humidité, pollution, chaleur.., en rapportant par-dessus, par collage, une dalle de protection transparente de sensiblement même dimensions que le substrat transparent sur lequel le film ou l'empilement de films est collé, en retrait du bord. L'encapsulation a pour effet technique de préserver dans le temps les qualités- optiques de ce- ou ces films. Elle permet en outre de renforcer le dispositif par une dalle qui peut être plus ou moins épaisse et plus ou moins rigide. Ceci est habituellement obtenu en enserrant le film ou l'empilement de films optiques entre le substrat et une dalle de protection de dimensions correspondantes. La dalle est réalisée dans un matériau optiquement transparent, par exemple un verre. Elle est collée par-dessus le substrat et le film ou l'empilement de films, en utilisant une couche de colle transparente d'indice adapté. Cette couche de colle recouvre la surface du film ou de l'empilement de films, et sa tranche, sur tout son pourtour. La tranche du film ou des films est ainsi protégée de l'humidité par la colle qui forme un joint étanche et la dalle de protection au-dessus, qui agit en outre comme dalle de renfort de la structure. Prenons en exemple un écran à cristaux liquides, dit écran LCD dans la suite. La structure de base d'un tel écran est illustrée sur la figure 1. Elle comprend une couche de cristaux liquide 3 enfermée entre deux substrats transparents 1 et 2, et un film optique polarisant sur la face externe de chaque substrat. La face arrière, par laquelle l'écran reçoit le flux de lumière qui va être modulé par commande électrique appropriée de la couche de cristaux liquide, est formée par le substrat arrière 1 et le film polarisant 9 disposé sur sa face externe en retrait du bord ; et la face avant, sur laquelle une image résultante va se former, comprend le substrat avant 2 et le film polarisant 4 disposé sur sa face externe en retrait du bord.

Dans l'exemple, une dalle de protection 6 est collée sur la face avant au moyen d'une couche de colle 5 recouvrant le film optique 4 et les parties 2_{ZP} du substrat avant, en débord du film optique 4.

Pour coller la dalle de protection 6 sur la face- avant d'un tel écran comportant un film optique 4 en retrait du bord du substrat avant. 2, deux méthodes peuvent être utilisées.

Une première méthode utilise une colle adhésive à laminer sur la face avant. Cette méthode suppose cependant un laminage à chaud. Il est en effet nécessaire de réaliser un fluage de la colle adhésive, afin de combler complètement l'espace entre le substrat avant 2 et la dalle 6, dans les parties 2_{ZP} du substrat dépassant du film optique. Il faut encore réaliser ce laminage à chaud, sous vide, pour éviter de piéger des bulles d'air sous la dalle. Cette méthode mobilise ainsi des équipements sophistiqués, donc coûteux.

Par ailleurs, les colles adhésives à laminer se présentent en pratique en bande de faible épaisseur, typiquement de l'ordre de 50µm, alors que l'épaisseur du film optique est plutôt de l'ordre de 250µm. Pour obtenir un relâchement suffisant des contraintes mécaniques sur l'écran, ainsi qu'une bonne couverture de la tranche du film optique, il est nécessaire de laminer successivement plusieurs couches de colle adhésive. Ainsi cette méthode a priori séduisante car simple de mise en oeuvre, se révèle en pratique coûteuse.

Une autre méthode utilise une dispense d'une colle non réticulée, de viscosité adaptée. Cette méthode à l'avantage de pouvoir être mise en oeuvre à température ambiante et sous atmosphère standard. Elle permet d'obtenir un assemblage uniforme de la dalle sur l'écran, exempt de bulles à l'interface avec le film optique.

Cette méthode a cependant un inconvénient majeur : la réticulation, ou polymérisation, de la colle, qui se fait de manière classique sous UV ou en température, introduit un rétreint de matière, dans toutes-les directions, et donc notamment en épaisseur. Ce rétreint de matière peut-être de l'ordre de 10%. Compte-tenu des faibles épaisseurs en jeu (relativement aux dimensions de la surface de face avant) et de la différence de marche entre le film optique et le substrat sur lequel le film optique est collé, le rétreint de matière adhésive en épaisseur est critique et conduit à des contraintes mécaniques susceptibles d'endommager le produit.

Pour illustrer ce problème, considérons comme indiqué sur la figure 2 qui est une vue-partielle du schéma en coupe de la figure 1, un film optique ayant une épaisseur de 250 *µm*. Considérons que la dispense de colle est faite pour obtenir au final une épaisseur de colle de l'ordre de 200 *µm* au dessus du film optique : on doit donc avoir une épaisseur de colle de l'ordre de 450 *µm* autour du film optique, entre les parties 2_{ZP} du substrat qui dépassent du film optique, et la dallé 6.

Au-dessus du film optique, après réticulation on a un rétreint de la matière de colle, de 20 *µm* : 10% de 200 *µm*.

Au-dessus du substrat, dans les parties 2_{ZP} en débord du film optique, le rétreint est de 45*µm* : 10% de 450 *µm*.

On a donc un différentiel d'épaisseur de colle entre la zone active, au dessus du film optique et la zone périphérique, qui est de l'ordre de 25 *µm*.

En pratique, selon l'épaisseur de colle, la rigidité de l'écran, le matériau utilisé pour la dalle de protection et son épaisseur, les contraintes mécaniques qui vont naturellement s'exercer pour compenser ce différentiel peuvent se traduire de différentes manières, qui peuvent se combiner entre elles, notamment :
- une déformation de l'écran : cette déformation entraîne alors une variation de l'épaisseur du cristal liquide en périphérie de la zone active, dégradant l'aspect cosmétique du produit.
- un délaminage de l'encapsulation, à l'interface colle/substrat et/ou colle/dalle, facilitant alors la pénétration de l'humidité et altérant par conséquent la fiabilité du produit final.
- une introduction de bulles localisées à la périphérie du film optique, dégradant l'aspect cosmétique du produit voire la fiabilité du produit si ces bulles arrivent à déboucher au bord du substrat, ce qui peut être notamment le cas lorsque la distance entre le bord du film optique et le bord du substrat est réduite.

Ainsi, les techniques de collage d'une dalle de protection sur une face d'un dispositif électro-optique qui n'est pas parfaitement plane mais présente un différentiel de hauteur du fait de la présence d'un film ou d'un empilement de films optiques collés sur un substrat mais en retrait du bord, entraînent des contraintes mécaniques qui ont des effets sur la qualité du produit fini.

La demande de brevet US-2009/011197 propose une technique de dépose d'un adhésif de grande viscosité pour former un joint étanche apte à boucher un interstice entre un cadre et un film transparent, permettant la dépose ultérieure d'un adhésif liquide à réticuler dans le volume délimité par le cadre et le joint étanche.

### RESUME DE L'INVENTION

L'invention propose une méthode de protection d'un dispositif électro-optique qui ne présente pas les défauts et inconvénients précités.

Elle utilise le principe d'une dispense de colle, mais réalisée en deux passes, une première passe pour d'abord rattraper la différence de marche entre le substrat et le film optique, une deuxième passe pour coller la dalle de protection. Les rétreints respectifs à chaque passe, s'exercent sur des épaisseurs plus réduites. Au final, le rétreint cumulé est bien plus limité. La qualité du produit s'en trouve très améliorée.

L'invention concerne ainsi un procédé de protection d'une face externe d'un dispositif électro-optique, la face externe présentant un élément optique formé d'un film optique ou d'un empilement de films optiques, collé sur un substrat optiquement transparent en retrait par rapport au bord du substrat, le procédé de protection comprenant une encapsulation de l'élément optique par collage d'une dalle de protection optiquement transparente sur la face externe du dispositif, les surfaces de dalle et de substrat étant sensiblement équivalentes, caractérisé en ce que le collage de la dalle comprend une dépose préalable d'adhésif réalisée en deux étapes :
- une première étape comprenant une dispense superficielle d'une colle à l'état non réticulé sur les parties du substrat dépassant de l'élément optique, suivie d'une réticulation, formant une bande marginale adhésive depuis le bord de l'élément optique vers le bord du substrat rattrapant la différence de hauteur entre le substrat et le film optique, et
- une deuxième étape de collage de la dalle de protection comprenant une dispense superficielle de la même colle à l'état non réticulé sur
l'ensemble de la face avant du dispositif, le collage de la dalle et une réticulation.

D'autres caractéristiques et avantages de l'invention apparaîtront à la lecture de la description détaillée qui suit et qui est faite en référence aux dessins annexés dans lesquels :
- la figure 1 est une vue en coupe transversale d'un écran LCD avec dalle de protection en face avant ;
- la figure 2 est une vue partielle de la figure 1, détaillant les différentes épaisseurs de la couche de colle relativement à l'épaisseur du film optique;
- la figure 3 illustre le principe d'un procédé de protection d'un élément optique sur une face externe d'un dispositif électro-optique, avec un dépôt de colle en deux passes selon l'invention, formant deux strates de colle, permettant de réduire le rétreint final, tout en recouvrant le film optique et en comblant l'espace entre la dalle et le substrat dans la zone périphérique entourant l'élément optique;
- les figures 4 et 5 illustrent deux variantes de mise en oeuvre du procédé de l'invention, l'une plus particulièrement applicable à des dispositifs de petites dimensions, avec une zone périphérique étroite, l'autre plus particulièrement applicable à des dispositifs de plus grandes dimensions, dans lesquels la zone périphérique est plus étendue.

### DESCRIPTION DETAILLEE DE L'INVENTION

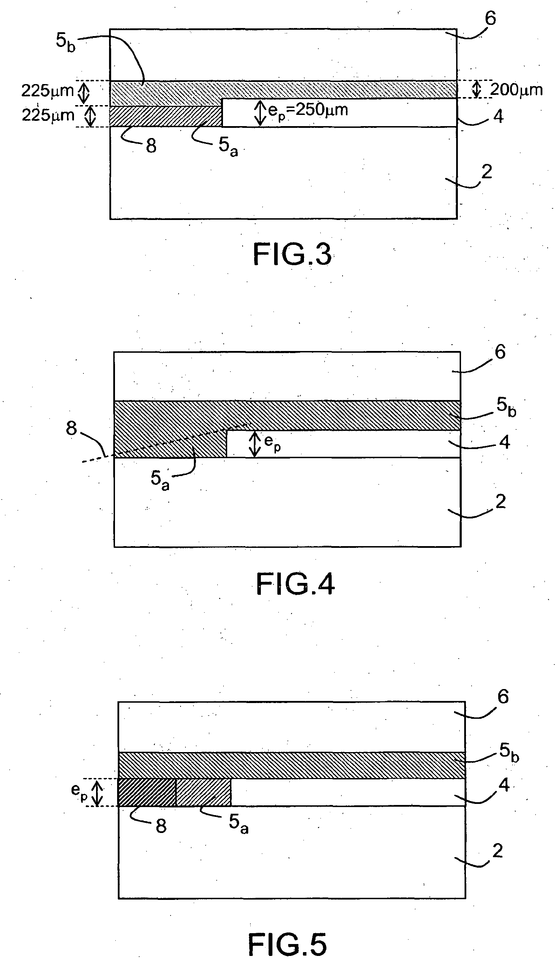

Un procédé de protection d'une face externe d'un dispositif électro-optique, la face externe présentant un élément optique formé d'un film optique ou d'un empilement de films optiques, collé sur un substrat optiquement transparent en retrait par rapport au bord du substrat, est décrit en relation avec les figures 3 et 4.

On précise que le terme film optique recouvre un élément ayant des propriétés purement optiques, tel qu'un film polarisant, ou un film déviateur d'angle de vue ; autant qu'un élément ayant des propriétés électro-optiques, par exemple un film photovoltaïque organique polarisant, qui est un film optique polarisant, qui permet en outre de produire de l'électricité, à partir de la lumière naturelle. Utilisé par exemple comme film optique polarisant dans un écran LCD, il apporte comme fonctionnalité supplémentaire, la production d'électricité à partir de la lumière de rétro-éclairage de l'écran LCD.

Un empilement de films optiques est formé par le collage l'un sur l'autre, par toute technique appropriée, de plusieurs films optiques, au moins deux, chaque film apportant au dispositif des fonctionnalités propres.

La figure 3 illustre le principe du dépôt de colle en deux passes d'un procédé de protection selon l'invention appliqué à la face externe d'un dispositif électro-optique. Cette face externe comprend un élément optique 4 collé sur un substrat transparent 2, en retrait du bord du substrat. La protection consiste à coller une dalle optiquement transparente 6 sur cette face externe. La rigidité et l'épaisseur de la dalle dépend du dispositif électro-optique considéré.

Selon l'invention, pour réaliser ce collage, une première strate de colle 5ₐ est réalisée, par dispense de colle non réticulée autour de l'élément optique, sur la zone 2_{ZP} du substrat 2 qui dépasse de l'élément optique. L'épaisseur de colle dispensée correspond sensiblement à l'épaisseur eₚ de l'élément optique, en sorte dé combler la différence de marche entre le substrat et l'élément optique, dans la zone périphérique autour de l'élément optique. Si on reprend l'exemple numérique des figures 1 et 2, d'un élément optique d'épaisseur eₚ = 250µm et d'une colle ayant un rétreint de 10%, après réticulation, le rétreint en épaisseur de cette première strate est de 25 µm. L'épaisseur de cette strate est donc après réticulation de 225µm.

Une deuxième strate de colle 5_{b} est alors réalisée, par dispense de colle non réticulée, par-dessus la première strate de colle et l'élément optique, et la dalle est déposée par-dessus cette deuxième strate de colle. On procède alors à une nouvelle réticulation.

Si on reprend l'exemple précédent de la figure 2, où l'on dépose 200µm de colle au dessus de l'élément optique : au-dessus de la première strate, on va alors avoir une épaisseur de colle de 225µm, comme illustré sur la figure 3, qui rend compte de manière schématique du rétreint de la première strate.

Après réticulation de cette deuxième strate, dans la région périphérique autour de l'élément optique, on va observer un rétreint en épaisseur de 22,5µm et au dessus de l'élément optique, on va observer un rétreint en épaisseur de 20µm : le différentiel en épaisseur de colle entre la zone périphérique et la zone au-dessus de l'élément optique n'est donc plus que de 2,5µm.

La dispense/réticulation de colle en deux passes permet donc de réduire considérablement les effets de rétreint de la colle et donc les contraintes mécaniques dans le produit fini. Le procédé proposé est donc très intéressant.

De préférence, la colle utilisée dans les deux passes est la même, ce qui permet de réduire les risques de délaminage ou d'altération à l'interface de jonction entre les deux strates de colle.

La face externe de l'élément optique est habituellement revêtue d'un film de protection. Ce film de protection sera conservé pour la première passe, et retiré avant de procéder à la deuxième passe, ce qui permet de retirer facilement le surplus éventuel de colle qui aurait pu se déposer à la surface de l'élément optique.

Pour la première passe, et dans le cas où l'espace entre le bord de l'élément optique et le bord du substrat est étroit, par exemple de l'ordre de 1 mm, on procèdera par exemple de la manière suivante : on déposera un boudin de colle de volume calibré autour de l'élément optique. La colle ainsi dispensée va progressivement remplir, en s'étendant (suivant son coefficient de viscosité), tout l'espace entre le bord de l'élément optique et le bord du substrat. On obtient une première strate d'épaisseur sensiblement uniforme dans tout cet espace.

Une variante possible illustrée à la figure 4, consiste à déposer un boudin de colle autour de l'élément optique, que l'on vient lisser en biseau depuis le bord de l'élément optique vers le bord du substrat, en prenant comme référence les arêtes de l'élément optique et du substrat. On obtient alors une première strate dont l'épaisseur diminue graduellement depuis une épaisseur maximale, au bord de l'élément optique, vers une épaisseur minimale au bord du substrat. Dans la vue en coupe illustrée sur la figure 4, le plan de surface en pente de la première strate correspond ainsi au plan passant par les arêtes de l'élément optique et du substrat. L'épaisseur maximale de cette première strate, au bord de l'élément optique, correspond sensiblement à l'épaisseur eₚ de l'élément optique : elle peut être un peu supérieure, ou un peu inférieure. Avec cette mise en oeuvre, on obtient un rétreint progressif de la colle, suffisant à réduire de manière satisfaisante les contraintes mécaniques sur la structure.

Dans le cas où l'espace entre le bord de l'élément optique et le bord du substrat est plus large, et comme illustré sur la figure 5, il est astucieux de réaliser une cale 7 sur le substrat, disposée au bord du substrat, et sensiblement de même épaisseur que l'élément optique. On peut alors former une première strate de colle 5ₐ dans un espace réduit, entre le bord de l'élément optique et cette cale (plus exactement-le bord intérieur de la cale). La dispense de colle de la première passe consiste alors à remplir à ras cet espace ou fossé, formé entre la cale et le bord de l'élément optique.

Avantageusement, la cale 7 et l'élément optique auront la même constitution. Prenons d'abord le cas où l'élément optique est formé d'un seul film optique. Un film optique est généralement livré sous forme d'une bande, dont une face est adhésive, et l'autre revêtue d'un film de protection. On peut ainsi réaliser le film optique et la cale dans les mêmes opérations (laminage, découpage par exemple). Si l'élément optique est un empilement de films, on peut de la même manière réaliser la cale et l'élément optique en même temps, par les mêmes étapes (laminage/découpe). Typiquement on colle les différentes bandes de film optique les unes par-dessus les autres, en retirant le film de protection à chaque fois, puis on découpe et on retire les parties en excès. Restent sur le substrat la cale et l'élément optique, avantageusement revêtus du film de protection du dernier film constituant l'empilement.

Le film de protection est avantageusement conservé pour la première dispense/réticulation de colle, et retiré après, avant la deuxième dispense/réticulation de colle.

Le collage de la dalle par dispense/réticulation de colle en deux passes, permet de réduire dans des proportions importantes l'ampleur du rétreint de colle. La qualité cosmétique du dispositif électro-optique ainsi encapsulé et sa résistance aux environnements sévères sont ainsi grandement améliorées.

Comme il ressort clairement de la description qui vient d'être faite, le procédé de protection selon l'invention se traduit dans le dispositif électro-optique par la présence de deux strates de colle entre le substrat et la dalle de protection. Ces deux strates peuvent être de même composition (même colle).

La présence de ces deux strates peut être vérifiée par des moyens optiques adaptés, par exemple par microscopie à balayage électronique. La première strate sera présente uniquement sur le substrat, dans la zone périphérique enserrant l'élément optique. La deuxième strate sera directement au-dessus de la première strate, ainsi que la surface de l'élément optique. L'épaisseur de la première strate, au moins dans une partie jouxtant l'élément optique, correspondra sensiblement à l'épaisseur de l'élément optique.

Selon le mode de mise en oeuvre du procédé de fabrication utilisé :
- la première strate pourra avoir une épaisseur sensiblement uniforme (cas illustré aux figures 3 et 5);
- ou une épaisseur diminuant graduellement depuis le bord de l'élément optique où elle sera maximale, jusqu'au bord du substrat où elle sera minimale (cas illustré à la figure 4). Au bord de l'élément optique, cette épaisseur peut être un peu supérieure ou un peu inférieure à celle de l'élément optique.

Lorsque l'épaisseur de la première strate sera uniforme, la première strate elle pourra s'étendre depuis le bord de l'élément optique au bord du substrat, c'est-à-dire couvrir toute la zone périphérique (figure 3) ; ou bien ne former qu'une bordure entourant et jouxtant l'élément optique (figure 5). Dans ce cas on trouvera une cale entre la bordure et le bord du substrat, où la cale, la bordure et l'élément optique seront tous sensiblement de même épaisseur. La cale et l'élément optique seront avantageusement de même constitution, c'est-à-dire constitué du même film optique ou du même empilement de film optique.

L'invention qui vient d'être décrite peut être appliquée à la protection d'une face externe de tout dispositif électro-optique, dans le but de protéger des agressions extérieures un ou des films optiques disposés sur cette face, en retrait du bord d'un substrat support et de rigidifier, renforcer la structure, dans le but de durcir le dispositif pour une utilisation en environnement sévère. Si elle peut être utilisée notamment à la protection de la face avant et/ou de la face arrière d'un dispositif d'affichage à cristaux liquides, elle s'applique plus généralement à tout dispositif électro-optique sensible aux variations d'épaisseur introduites par des contraintes mécaniques.

## Revendications

1. Procédé de protection d'une face externe d'un dispositif électro-optique, la face externe présentant un élément optique (4) formé d'un film optique ou d'un empilement de films optiques, collé sur un substrat optiquement transparent (2) en retrait par rapport au bord du substrat, le procédé de protection comprenant une encapsulation de l'élément optique par collage d'une dalle de protection (6) optiquement transparente sur la face externe, les surfaces de dalle (6) et de substrat (2) étant sensiblement équivalentes, le collage de la dalle comprenant une dépose préalable d'adhésif réalisée en deux étapes :
- une première étape comprenant une dispense superficielle d'une colle à l'état non réticulé sur les parties (2_{ZP}) du substrat dépassant de l'élément optique, suivie d'une réticulation, formant une bande marginale adhésive (5a) depuis le bord de l'élément optique vers le bord du substrat rattrapant la différence de hauteur (eₚ) entre le substrat et l'élément optique, **caractérisé en ce que** le procédé comprend :
- une deuxième étape comprenant une dispense superficielle de la même colle à l'état non réticulé sur l'ensemble de la face avant du dispositif, le collage de la dalle et une réticulation.

2. Procédé selon la revendication 1, l'élément optique comporte un film de protection de sa face externe qui est conservé pour la première étape mais retiré avant de procéder à la deuxième étape.

3. Procédé selon la revendication 1 ou 2, dans lequel dans la première étape, la dispense de colle comprend un lissage en biseau de la colle, prenant appui sur les arêtes du substrat et de l'élément optique, la bande marginale d'adhésif (5a) ainsi formée rattrapant graduellement la différence de hauteur entre le substrat et l'élément optique.

4. Procédé selon la revendication 1 ou 2, dans lequel la première étape comprend la réalisation d'une cale (8) sur le substrat, le long du bord, avec une hauteur de cale sensiblement égale à l'épaisseur de l'élément optique, formant ainsi un fossé périphérique au bord de l'élément optique, et le remplissage à ras bord du fossé avec la colle.

5. Procédé selon la revendication 4, dans lequel la cale et l'élément optique sont de même constitution, et comportent sur leur face externe un film de protection qui est conservé pour la première étape mais retiré avant de procéder à la deuxième étape.

6. Dispositif électro-optique dont une face externe comportant un élément optique formé d'un film optique ou d'un empilement de films optiques, collé en retrait sur un substrat optique transparent, est durcie par encapsulation par une dalle suivant un procédé de protection selon l'une quelconque des revendications précédentes.

## Patentansprüche

1. Verfahren zum Schützen einer Außenfläche einer elektro-optischen Vorrichtung, wobei die Außenfläche ein optisches Element (4) aufweist, das durch einen optischen Film oder einen Stapel optischer Filme gebildet ist und auf ein optisch durchsichtiges Substrat (2) versetzt in Bezug auf den Rand des Substrats geklebt ist, wobei das Schutzverfahren eine Einkapselung des optischen Elements durch Aufkleben einer optisch durchsichtigen Schutzplatte (6) auf die Außenfläche umfasst, wobei die Flächen der Platte (6) und des Substrats (2) im Wesentlichen gleich sind, wobei das Aufkleben der Platte das vorherige Auftragen eines Haftmittels in zwei Schritten umfasst:
- ein erster Schritt, in dem ein Klebstoff im nicht vernetzten Zustand auf die das optische Element überragenden Teile (2_{ZP}) des Substrats oberflächlich gegeben wird, worauf eine Vernetzung folgt, wodurch ein haftender Randstreifen (5a) von dem Rand des optischen Elements zu dem Rand des Substrats gebildet wird, mit dem der Höhenunterschied (eₚ) zwischen Substrat und optischem Element ausgeglichen wird, **dadurch gekennzeichnet, dass** das Verfahren Folgendes aufweist:
- einen zweiten Schritt, in dem derselbe Klebstoff im nicht vernetzten Zustand auf die gesamte vordere Fläche der Vorrichtung oberflächlich gegeben wird, die Platte aufgeklebt wird und eine Vernetzung erfolgt.

2. Verfahren nach Anspruch 1, wobei das optische Element einen Film zum Schutz seiner Außenfläche aufweist, der für den ersten Schritt aufrechterhalten bleibt, aber vor Durchführung des zweiten Schritts entfernt wird.

3. Verfahren nach Anspruch 1 oder 2, bei dem im ersten Schritt gestützt auf die Kanten des Substrats und des optischen Elements die Klebstoffabgabe ein schräg ausgerichtetes Glätten des Klebstoffs umfasst, wobei der derart gebildete haftende Randstreifen (5a) den Höhenunterschied zwischen Substrat und optischem Element schrittweise ausgleicht.

4. Verfahren nach Anspruch 1 oder 2, bei dem der erste Schritt die Herstellung eines Keils (8) auf dem Substrat entlang des Randes umfasst, wobei die Keilhöhe im Wesentlichen gleich der Dicke des optischen Elements ist, wodurch ein umfänglicher Graben am Rand des optischen Elements entsteht, und das mit dem Rand bündige Verfüllen des Grabens mit Klebstoff.

5. Verfahren nach Anspruch 4, bei dem der Keil und das optische Element identisch aufgebaut sind und auf ihrer Außenfläche einen Schutzfilm aufweisen, der für den ersten Schritt aufrechterhalten bleibt, aber vor Durchführung des zweiten Schritts entfernt wird.

6. Elektro-optische Vorrichtung, bei der eine Außenfläche mit einem optischen Element, das durch einen optischen Film oder einen Stapel optischer Filme gebildet ist und auf ein durchsichtiges optisches Substrat versetzt geklebt ist, mittels Einkapselung durch eine Platte gemäß einem Schutzverfahren nach einem beliebigen der vorhergehenden Ansprüche gehärtet wird.

## Claims

1. Protection method of an external face of an electro-optical device, the external face having an optical element (4) formed from an optical film or a stacking of optical films, bonded on an optically transparent substrate (2) offset in relation to the edge of the substrate, the protection method comprising an encapsulation of the optical element by bonding an optically transparent protection tile (6) on the external face, the tile (6) and substrate (2) surfaces being noticeably similar, the bonding of the tile comprising the prior application of glue performed in two steps:
- a first step comprising a superficial dispensation of a glue in the non-reticulated state on the parts (2_{ZP}) of the substrate overshooting the optical element, followed by a reticulation, forming the marginal adhesive band (5a) from the edge of the optical element to the edge of the substrate making up the difference in height (eₚ) between the substrates and the optical element, **characterized in that** the method comprises:
- a second step comprising a superficial dispensation of the same glue in the non-reticulated state over the entire front face of the device, the bonding of the tile and a reticulation.

2. Method according to claim 1, the optical element comprises a protective film on its external face that is kept for the first step but removed before moving on to the second step.

3. Method according to claim 1 or 2, in which in the first step, the dispensation of the glue comprises a beveled smoothing of the glue, resting on the edges of the substrate and the optical element, the marginal adhesive band (5a) thus formed gradually making up the difference in height between the substrate and the optical element.

4. Method according to claim 1 or 2, in which the first step comprises the realization of a block (8) on the substrate, along the edge, with a block height noticeably equal to the thickness of the optical element, thus forming a peripheral gap at the edge of the optical element, and the filling to the brim of the gap with the glue.

5. Method according to claim 4, in which the block and the optical element are of the same constitution, and comprise on their external face a protective film that is kept for the first step but withdrawn before moving to the second step.

6. Electro-optical device of which one external face comprising an optical element or a stacking of optical films, offset bonded on a transparent optical substrate, is hardened by encapsulation by a tile according to a protection method according to any of the previous claims.
